# EUROPÄISCHE PATENTSCHRIFT

(11) **EP 2 739 856 B1**
(45) Veröffentlichungstag und Bekanntmachung des Hinweises auf die Patenterteilung: **02.11.2016**
(21) Anmeldenummer: 13700722.5
(22) Anmeldetag: 17.01.2013
(51) Int. Cl.: F04D 13/06, F04D 29/58, H02K 1/14, H02K 5/128, H02K 7/14, H02K 11/00, H02K 21/24

(54) **NASSLÄUFERPUMPE MIT LEISTUNGSELEKTRONIK**
WET ROTOR PUMP COMPRISING POWER ELECTRONICS
POMPE À ROTOR NOYÉ COMPORTANT UNE ÉLECTRONIQUE DE PUISSANCE

(30) Priorität: 20.01.2012 DE 102012200806
(43) Veröffentlichungstag der Anmeldung: 11.06.2014
(73) Patentinhaber: Yasa Motors Poland SP. Z O.O., 39-300 Mielec (PL)
(72) Erfinder: MÜLLER, Markus, 97702 Münnerstadt (DE)
(74) Vertreter: Richardt Patentanwälte PartG mbB
(86) Internationale Anmeldenummer: PCT/EP2013/050814
(87) Internationale Veröffentlichungsnummer: WO 2013/107805

(56) Entgegenhaltungen:
- EP-A2- 0 844 723
- EP-A2- 1 130 741
- WO-A1-01/09512
- WO-A1-99/08363
- DE-A1- 19 622 286
- US-A- 3 291 056
- US-A- 5 288 215

## Beschreibung

Die Erfindung betrifft eine Nassläuferpumpe zur Förderung eines Fluids, insbesondere einer Flüssigkeit nach dem Oberbegriff des Anspruchs 1. Aus der DE 19622286 ist eine solche Nassläuferpumpe bekannt. Aus DE 10 2005 015 213 A1 ist eine Nassläuferpumpe bekannt. Die Nassläuferpumpe weist einen mit einem Pumpenrad verbundenen Rotor auf, der in einem von einem geförderten Fluid durchströmten Nassbereich angeordnet ist. Der Nassbereich ist von einem Trockenbereich, in dem der Stator angeordnet ist, getrennt. Die Abgrenzung des Nassbereichs von dem Trockenbereich erfolgt durch eine Leiterplatte, deren elektrische Leitungen den Stator ausbilden, sodass die Leiterplatte gleichzeitig einen Spalttopf ausbildet.

Aus DE 103 03 778 A1 ist eine elektrisch angetriebene Pumpe bekannt, welche einen als Scheibenläufer ausgebildeten elektrischen Antriebsmotor aufweist. Der Magnetring des Antriebsmotors ist in einem von Fluid durchströmten Bereich angeordnet.

Ferner sind Axialflussmotoren an sich aus dem Stand der Technik bekannt. Bei einem Axialflussmotor verläuft der magnetische Fluss im Luftspalt des Motors in axialer Richtung, vergleiche zum Beispiel DE 100 53 400 A1.

Der Erfindung liegt demgegenüber die Aufgabe zugrunde eine verbesserte Nassläuferpumpe zu schaffen.

Die der Erfindung zugrunde liegende Aufgabe wird mit den Merkmalen von Patentanspruch 1 gelöst. Ausführungsformen der Erfindung sind in den abhängigen Patentansprüchen angegeben.

Nach Ausführungsformen der Erfindung wird eine Nassläuferpumpe mit einem Axialflussmotor geschaffen, die eine Einlassleitung für das Fluid aufweist, welche durch den Stator und den Spalttopf hindurch verläuft. Dies ermöglicht es, die Leistungselektronik zur Ansteuerung des Stators in den Raum zwischen dem Stator und dem Spalttopf anzuordnen. Da sich dieser Raum im Trockenbereich der Nassläuferpumpe befindet, ist eine wasserdichte Kapselung der Leistungselektronik nicht erforderlich. Durch die Geometrie der Nassläuferpumpe wird eine besonders kompakte Bauweise ermöglicht, da der durch den Stator, insbesondere die Statorzähne, und die Einlassleitung gebildete Zwischenraum für die Unterbringung der Leistungselektronik genutzt wird.
Nach Ausführungsformen der Erfindung ist die Leistungselektronik auf einer ringförmigen Platine angeordnet, wobei die Einlassleitung durch die Platine hindurch verläuft.

Nach Ausführungsformen der Erfindung wird eine Nassläuferpumpe geschaffen, bei welcher eine Einlassleitung für das Fluid durch den Stator, den Spalttopf und das Lager für den Impeller hindurch verläuft. Eine solche Geometrie hat insbesondere den Vorteil, einer besonders kompakten Bauweise der Nassläuferpumpe, das heißt einer geringen Bauhöhe, verbunden mit einer hohen Leistungsdichte.

Ausführungsformen der Erfindung sind ferner besonders vorteilhaft, da das Lager gleichzeitig als Dichtung an dem Übergang zwischen der Sog- und der Druckseite der Nassläuferpumpe wirkt. Aufgrund der relativ kleinen Spaltmasse und der geringen Toleranzen des Lagers kommt es nur zu geringen Leckageverlusten.

Nach einer Ausführungsform der Erfindung erfolgt der Einlass des Fluids durch eine Zentralöffnung des Spalttopfs. Insbesondere kann der Spalttopf einen Einlassstutzen ausbilden.

Nach einer Ausführungsform der Erfindung ist der Stator torusförmig ausgebildet. Insbesondere kann der Stator eine ringförmige Statorzahnaufnahme aufweisen, an der Statorzähne angeordnet sind. Die Statorzähne können beispielsweise durch eine Klebung an der Statorzahnaufnahme befestigt sein.

Nach einer Ausführungsform der Erfindung hat jeder der Statorzähne einen Aufnahmebereich für eine Spule. Am luftspaltseitigen Ende hat jeder der Statorzähne einen vergrößerten Querschnitt. Dies hat den Vorteil, dass das Magnetfeld in einem größeren Bereich innerhalb des Luftspalts annähernd homogen ist und so die in radialer Richtung schmäleren Rotormagnete völlig umschlingt, wodurch die Selbstzentrierung des Impellers unterstützt wird. Unter "Luftspalt" wird hier der Abstand zwischen den Enden der Statorzähne und dem Rotor verstanden, auch wenn in diesem Spalt keine oder nicht nur Luft ist, wie z.B. das Fluid.

Nach einer Ausführungsform der Erfindung ist die Leistungselektronik, welche zur Ansteuerung der Spulen des Stators dient, innerhalb des von dem Stator und dem Spalttopf umschriebenen Raum angeordnet, wie zum Beispiel auf einer ringförmigen Leiterplatte. Hierdurch kann die Bauhöhe der Nassläuferpumpe weiter verringert werden.

Nach einer Ausführungsform der Erfindung wird der Spalttopf durch eine ringförmige Scheibe gebildet, die in den Luftspalt zwischen dem Stator und dem Rotor hineinragt und welche den Trockenbereich der Nassläuferpumpe von dem Nassbereich trennt. Die ringförmige Scheibe hat eine Zentralöffnung, an welcher der Einlassstutzen angeordnet ist, der durch das Zentrum des Stators hindurch verläuft. An dem scheibenseitigen Endbereich des Einlassstutzens ist das Lager für den Impeller angeordnet, durch welches das Fluid in den Nassbereich einströmt, nachdem es den Trockenbereich durch die Einlassleitung hindurch durchströmt hat. Die Scheibe und der Einlassstutzen können einstückig ausgebildet sein, insbesondere als Kunststoffspritzgussteil. Insbesondere kann der Spalttopf als Kunstoffteil (z.B. aus PPS/GFK/CFK) oder als nicht-magnetisches metallisches Teil ausgebildet sein.

Nach einer Ausführungsform der Erfindung ist das Lager als Gleitlager ausgebildet, wobei eine Lagerbuchse des Gleitlagers an den scheibenseitigen Endbereich des Einlassstutzens angeordnet ist und ein Gleitlagerelement des Gleitlagers an dem Impeller befestigt ist. Eine Gleitfläche des Gleitlagerelements greift in die Lagerbuchse ein, sodass eine radiale Lagerung gegeben ist. Für eine zusätzliche einseitige axiale Lagerung zur Aufnahme der magnetischen Anziehungskraft des Stators, welche über den Rotor auf den Impeller wirkt, kann an dem Lager eine weitere Gleitfläche vorgesehen sein.

Ausführungsformen der Erfindung sind besonders vorteilhaft, da durch den Axialflussmotor auf den Impeller eine magnetische Anziehungskraft in Richtung auf den Stator ausgeübt wird, sodass der Impeller nur einseitig gelagert zu werden braucht. Dies vereinfacht den Aufbau und reduziert weiter die erforderliche Bauhöhe der Nassläuferpumpe.

Nach einer Ausführungsform der Erfindung hat das Gleitlagerelement in radialer Richtung Durchgangslöcher, wie zum Beispiel ca. 1 mm große Schmierbohrungen, welche dazu dienen, einen sehr kleinen Teil des Volumenstroms des Fluids durch das Lager zu lenken, um es so zusätzlich zu schmieren.

Nach einer Ausführungsform der Erfindung ist das Lager mit einer Kombination aus Diamond-Like-Carbon und Siliciumcarbid (SiC) beschichtet, um das Lager besonders langlebig zu machen.

Nach einer Ausführungsform der Erfindung ist das Lager als Kombination aus Gleit- und Wälzlager ausgebildet, welches zur axialen, wie radialen Lagerung des Impellers ausgebildet ist. Das Wälzlager dient hierbei zur Aufnahme der axialen Kräfte, während das nach hydrodynamischen Gesichtspunkten ausgeprägte Gleitlager zur Aufnahme der radialen Kräfte dient.

Ausführungsformen der Erfindung sind besonders vorteilhaft, da insbesondere in axialer Richtung große Kräfte aufgrund der Anziehung von Stator- und Rotormagneten entstehen können, die zu einem hohen Verschleiß in einem Gleitlager führen können. Ein Wälzlager zeichnet sich hingegen durch eine geringe Reibung hauptsächlich in Form von Rollreibung aus, so dass der Verschleiß des Lagers gegenüber einem Gleitlager reduziert ist.

Nach einer Ausführungsform der Erfindung wird das Wälzlager durch Lagerschalen, welche Laufflächen zur Aufnahme von Wälzkörpern aufweisen, sowie Wälzkörpern gebildet. Hierbei ist eine erste Lagerschale an dem Impeller befestigt, während eine zweite Lagerschale an dem Spalttopf befestigt ist. Die Wälzkörper befinden sich in dem von den Laufflächen der Lagerschalen umschriebenen Raum.

Nach einer Ausführungsform der Erfindung wird das Gleitlager impellerseitig durch die äußere Mantelfläche der ersten Lagerschale, sowie die Mantelfläche des Spalttopfs gebildet. Spalttopfseitig wird das Gleitlager durch die innere Mantelfläche der zweiten Lagerschale und die Mantelfläche des Impellers gebildet.

Ausführungsformen sind besonders vorteilhaft, da die Lagerschalen einerseits einen Teil des Gleitlagers und andererseits einen Teil des Wälzlagers darstellen. Es handelt sich also um ein Hybridlager. Durch diese Anordnung ist ein sehr kompaktes und gleichzeitig langlebiges und robustes Lager für eine Nassläuferpumpe gegeben.

Um die Haltbarkeit des Lagers weiter zu steigern, sind nach einer Ausführungsform der Erfindung die Mantelflächen und/oder die Laufflächen der Lagerschalen und /oder die Wälzkörper mit Siliziumcarbid (SiC) und /oder Diamond-Like-Carbon (DLC) und/oder Silizium-dotierten DLC beschichtet.

Nach einer Ausführungsform der Erfindung ist das Lager als Kombination aus Gleit- und Magnetlager ausgebildet, welches zur axialen, wie radialen Lagerung des Impellers ausgebildet ist. Das Magnetlager dient hierbei zur Aufnahme der axialen Kräfte, während das nach hydrodynamischen Gesichtspunkten ausgeprägte Gleitlager zur Aufnahme der radialen Kräfte dient.

Ausführungsformen der Erfindung sind besonders vorteilhaft, da ein Magnetlager sich durch eine idealerweise verschwindende Reibung auszeichnet, wodurch die Haltbarkeit des Lagers gegenüber einem Gleitlager deutlich erhöht wird. Weiter steigt die Effizienz der Nassläuferpumpe aufgrund der sehr geringen Reibungsverluste.

Nach einer Ausführungsform der Erfindung wird das Magnetlager durch Magnetringe gebildet. Hierbei ist ein erster Magnetring an dem Impeller befestigt, während ein zweiter Magnetring an dem Spalttopf befestigt ist. Die Magnetisierung der magnetischen Ringe ist dabei si gestaltet, dass sie sich im in der Nassläuferpumpe montierten Zustand in axialer Richtung abstoßen.

Nach einer Ausführungsform der Erfindung wird das Gleitlager impellerseitig durch die äußere Mantelfläche des ersten Magnetrings, sowie die Mantelfläche des Spalttopfs gebildet. Spalttopfseitig wird das Gleitlager durch die innere Mantelfläche des zweiten Magnetrings und die Mantelfläche des Impellers gebildet.

Ausführungsformen sind besonders vorteilhaft, da die Magnetringe einerseits einen Teil des Gleitlagers und andererseits einen Teil des Magnetlagers darstellen. Es handelt sich also um ein Hybridlager. Durch diese Anordnung ist ein sehr kompaktes und gleichzeitig langlebiges und robustes Lager für eine Nassläuferpumpe gegeben.

Um die Haltbarkeit des Lagers weiter zu steigern, sind nach einer Ausführungsform der Erfindung die Mantelflächen der Magnetringe mit Siliziumcarbid (SiC) und /oder Diamond-Like-Carbon (DLC) und/oder Silizium-dotierten DLC beschichtet.

Nach einer weiteren Ausführungsform wird das Lager durch einen Feindrahtfilter vor dem Eindringen von Partikeln in das Lager geschützt. Hierdurch wird das Lager vor Beschädigungen durch Partikel, welche im Medium mitgeführt werden könnten, geschützt.

Nach einer Ausführungsform der Erfindung wird der Rotor durch ein permanentmagnetisches Material, nämlich Samarium-Cobalt (SmCo) gebildet. Dies ist in mehrfacher Hinsicht vorteilhaft:
- Samarium-Cobalt kann bei hohen Temperaturen eingesetzt werden, ohne dass die Remanenz der Magnetisierung leidet. Aufgrund dessen kann das Fluid eine Temperatur von zum Beispiel bis zu 200°C haben.
- Samarium-Cobalt besitzt exzellente Korrosionseigenschaften und kann mit einem einfachen oder ohne Korrosionsschutz direkt dem Fluid ausgesetzt werden.
- Da eine Kapselung zum Beispiel in Edelstahl von Samarium-Cobalt zum Korrosionsschutz nicht erforderlich ist, kann das magnetische Material am äußersten Rand der Peripherie des Impellers bzw. der Antriebsscheibe angeordnet sein, sodass das permanentmagnetische Material mit einem maximalen Radius positioniert werden kann.

Das den Rotor bildende permanentmagnetische Material kann dabei in Form von mehreren einzelnen flachen Dauermagneten an der Peripherie des Impellers angeordnet sein oder in Form eines einzigen magnetischen Rings mit multipolarer Magnetisierung. Insbesondere können die Magnete bzw. der magnetische Ring unmittelbar an der Peripherie des Impellers oder über eine Antriebsscheibe an dem Impeller befestigt sein.

Im Weiteren werden Ausführungsformen der Erfindung mit Bezugnahme auf die Zeichnungen näher erläutert. Es zeigen:
- Figur 1: eine Explosionsansicht einer erfindungsgemäßen Nassläuferpumpe,
- Figur 2a: eine Seitenansicht eines einzelnen Statorzahns,
- Figur 2b: eine Frontansicht des Statorzahns gemäß Figur 2a,
- Figur 2c: eine perspektivische Ansicht des Statorzahns gemäß Figur 2a,
- Figur 3a: eine Draufsicht auf den Stator,
- Figur 3b: eine Schnittansicht des Stators,
- Figur 4a: eine Draufsicht auf eine Ausführungsform des Spalttopfs,
- Figur 4b: eine Schnittansicht des Spalttopfs gemäß Figur 4a,
- Figur 4c: eine Schnittansicht der Lagerbuchse des Spalttopfs gemäß Figur 4a,
- Figur 4d: eine Schnittansicht einer Ausführungsform des Gleitlagerelements des Impellers,
- Figur 5a: eine Draufsicht auf eine Ausführungsform des Rotors,
- Figur 5b: eine Schnittansicht des Rotors gemäß Figur 5a,
- Figur 6: eine Schnittansicht einer Ausführungsform der Antriebsscheibe,
- Figur 7: eine Schnittansicht einer Ausführungsform des Impellers,
- Figur 8: eine Schnittansicht der Nassläuferpumpe gemäß Figur 1 im montierten Zustand.
- Figur 9: eine Schnittansicht einer Nassläuferpumpe mit einem Hybridlager bestehend aus Wälz- und Gleitlager,
- Figur 10: eine Schnittansicht einer weiteren erfindungsgemäßen Nassläuferpumpe.

Im Weiteren werden Elemente der nachfolgenden Ausführungsformen, die einander entsprechen oder identisch sind, jeweils mit denselben Bezugszeichen gekennzeichnet.

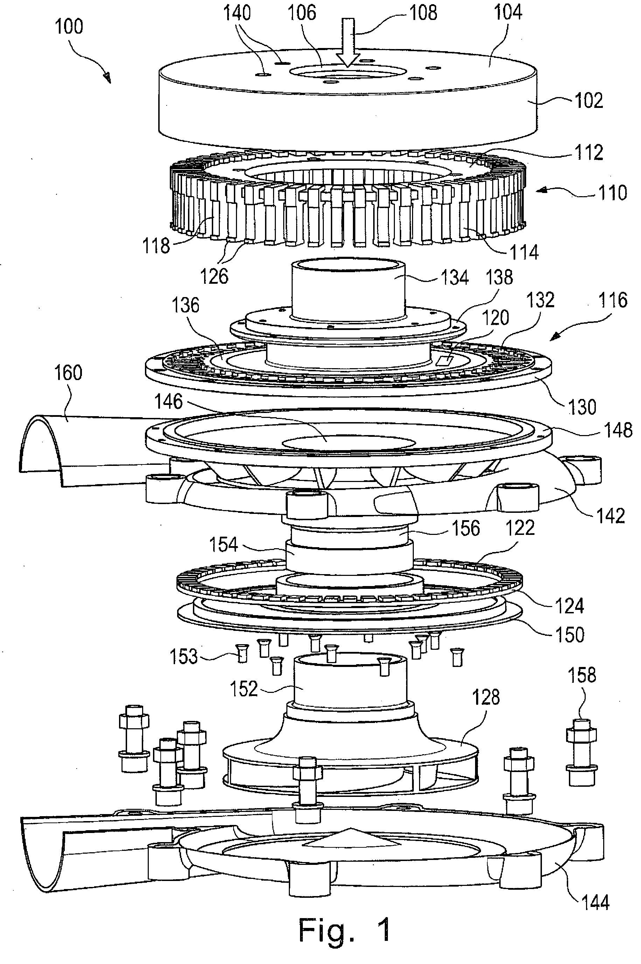

Die Figur 1 zeigt eine Explosionsdarstellung einer Ausführungsform einer erfindungsgemäßen Nassläuferpumpe 100. Die Nassläuferpumpe 100 hat eine Motorabdeckung 102, die eine kreisförmige Stirnseite 104 aufweist. Im Zentrum der Stirnseite 104 befindet sich eine Öffnung 106, welche zum Einströmen eines Fluids 108 vorgesehen ist.

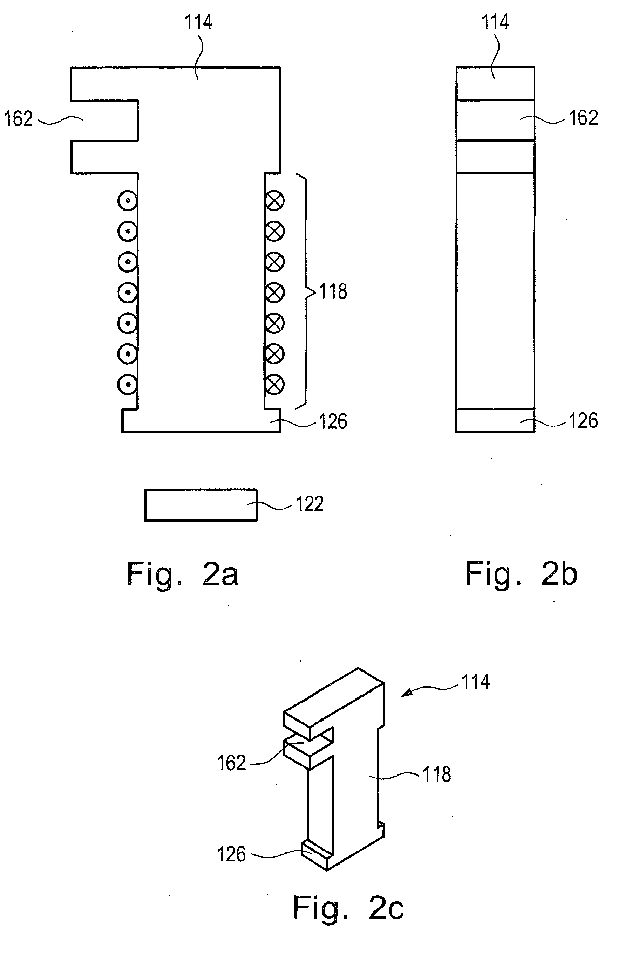

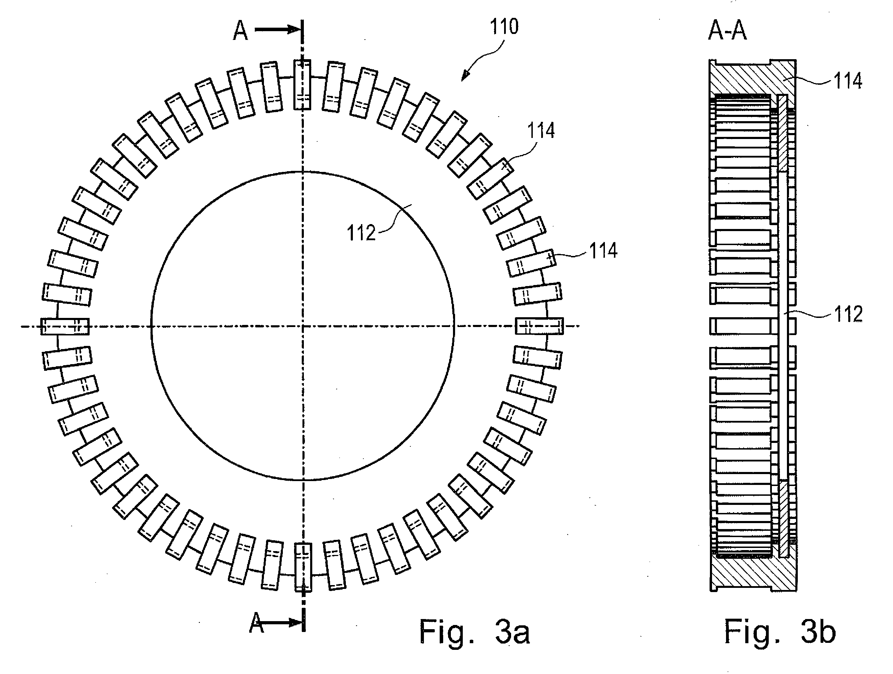

Die Motorabdeckung 102 dient zur Abdeckung eines Stators 110. Der Stator 110 hat eine Statorzahnaufnahme 112, die ringförmig ausgebildet ist und an der Statorzähne 114 kreisförmig angeordnet sind. Jeder der Statorzähne hat einen Aufnahmebereich 118, auf dem eine Spule aufgewickelt ist (vergleiche Figuren 2 und 3).

Die verschiedenen Spulen der Statorzähne 114 sind mit einer Leistungselektronik 120 elektrisch verbunden, welche zur Ansteuerung der Spulen dient.

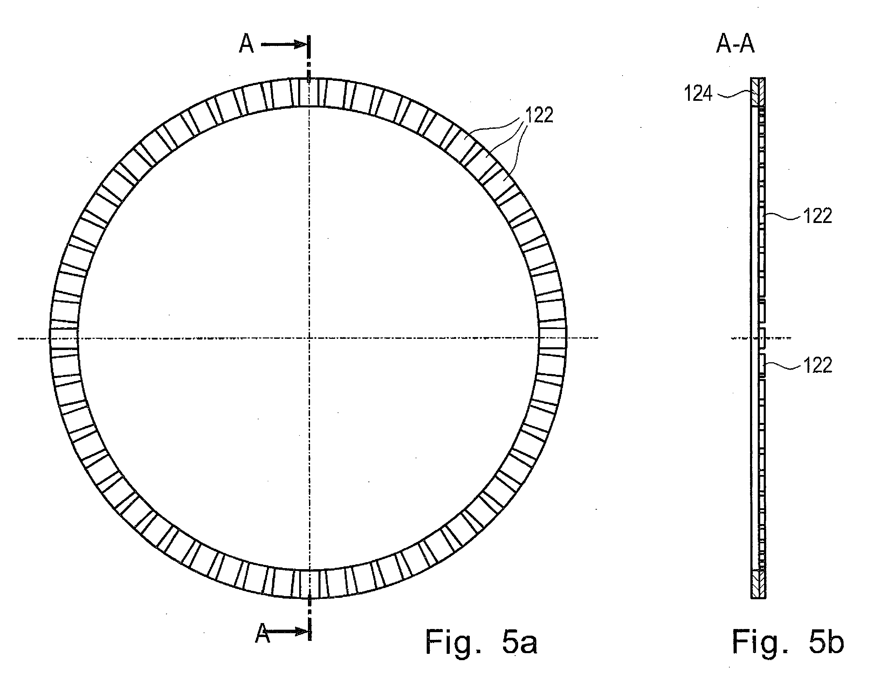

Der Rotor des Axialflussmotors wird bei der hier betrachteten Ausführungsform durch ein permanentmagnetisches Material gebildet, welches hier in Form einzelner Permanentmagnete 122 auf einem Ring 124 angeordnet ist (vergleiche Figur 5).

Die Permanentmagnete 122 haben eine Magnetisierung in axialer Richtung, sodass sich der magnetische Fluss zwischen den Enden 126 der Statorzähne 114 und den Permanentmagneten 122 über einen Luftspalt, der zwischen den Enden 126 und den Permanentmagneten 122 besteht, ebenfalls in axialer Richtung der Nassläuferpumpe 100 erstreckt. Aufgrund dessen wird eine magnetische Anziehungskraft, welche von dem Stator 110 auf die Permanentmagnete 122, und damit auf einen Impeller 128 der Nassläuferpumpe 100 ausgeübt.

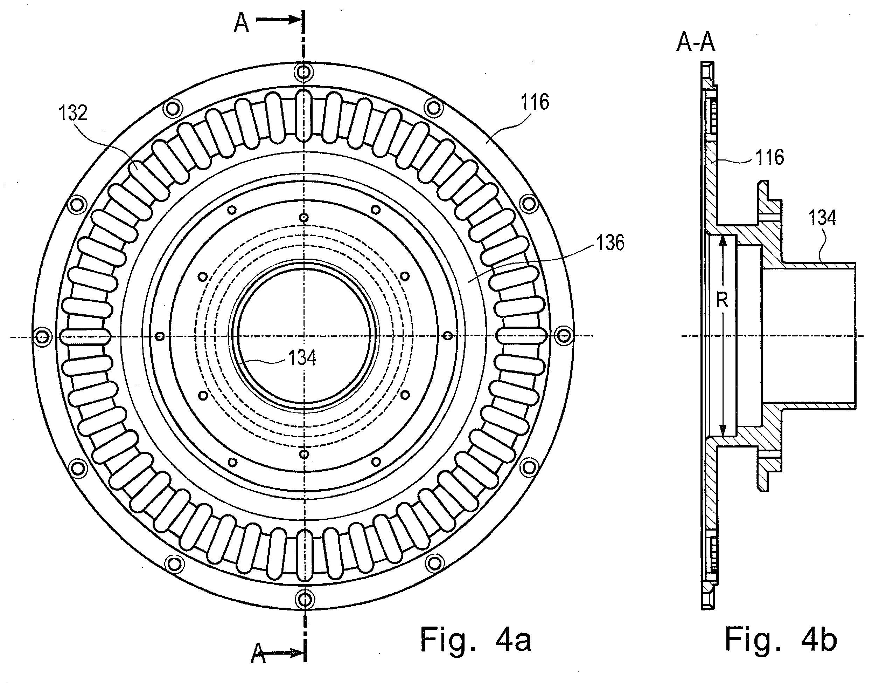

In den Luftspalt zwischen den Enden 126 der Statorzähne 114 und den Permanentmagneten 122 ragt eine Scheibe 130 eines Spalttopfs 116. Die Scheibe 130 hat Ausnehmungen 132, die zur Aufnahme der Enden der Statorzähne 114 dienen (vergleiche Figur 4a, 4b). Die zwischen den Ausnehmungen liegenden Verstrebungen steigern die mechanische Stabilität des Motoraufbaus und ermöglichen eine möglichst geringe Materialdicke und somit einen minimalen Luftspalt. Beispielsweise beträgt die Wandstärke des Spalttopfes 116 in den Ausnehmungen 132 zwischen 0,7mm u. 0,2mm. Eine solche geringe Wandstärke verkleinert den Luftspalt, was wiederum den Wirkungsgrad und die Leistung bei gleichbleibendem Einsatz einer gewissen Menge Seltener Erden-Magnete erhöht. Hierdurch wird die mechanische Stabilität des Motoraufbaus verbessert.

Die Scheibe 130 hat eine axiale Öffnung, auf der ein Einlassstutzen 134 angeordnet ist.

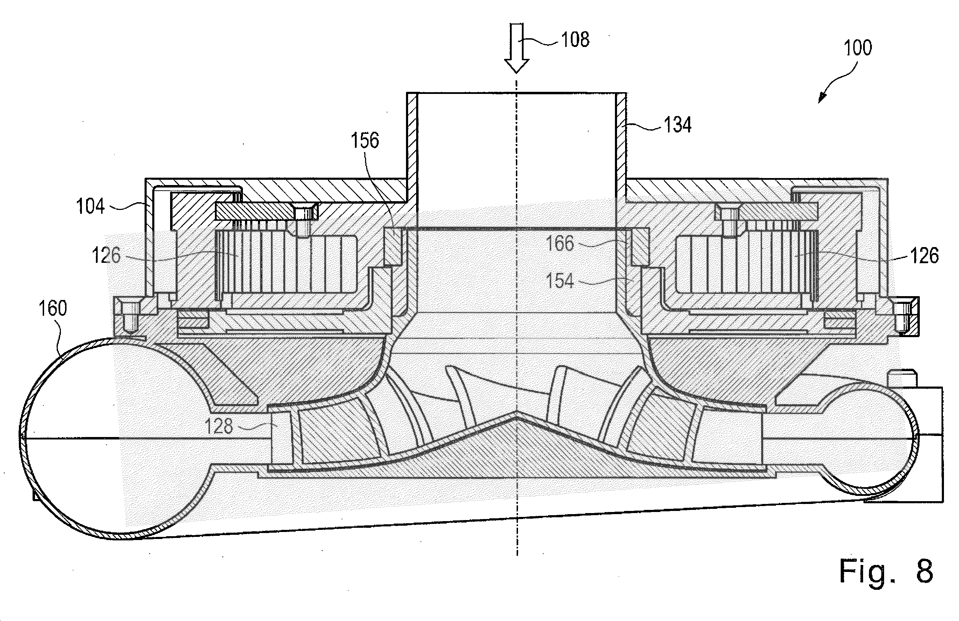

Der Einlassstutzen 134 ragt im montierten Zustand der Nassläuferpumpe 100 (vergleiche Figur 8) durch den Stator 110 und die Öffnung 106 der Motorabdeckung 102 hindurch, sodass über den Einlassstutzen 134 das Fluid 108 einströmen kann.

Durch den Spalttopf 116 und den Stator 110 wird ein Raum umschrieben, in dem die Leistungselektronik angeordnet sein kann, wie zum Beispiel auf einer ringförmigen Platine 136, deren äußerer Radius durch die Ausnehmungen 132 und deren innerer Radius durch die Wandung des Einlassstutzens 134 begrenzt ist. Diese Platine 136 kann die verschiedenen elektrischen und elektronischen Komponenten zur Realisierung der Leistungselektronik 120 tragen. Da diese in dem Trockenbereich der Nassläuferpumpe 100 angeordnet ist, ist eine besondere Kapselung der Leistungselektronik 120 nicht unbedingt erforderlich.

An dem Einlassstutzen 134 ist in einem axialen Abstand von der Scheibe 130 ein Befestigungsbereich 138 angeordnet, an dem die Motorabdeckung 102 zum Beispiel durch Schraubverbindungen befestigt wird. Der Stator 110 wird dann zwischen der Motorabdeckung 102 und der Scheibe 130 gehalten, wobei die Enden 126 der Statorzähne 114 in den Ausnehmungen 132 stehen und dort z.B. formschlüssig gehalten werden.

Der Befestigungsbereich 138 kann zum Beispiel ringförmig ausgebildet sein, wie in der Figur 1 gezeigt, und Innengewinde zur Ausbildung von Schraubverbindungen zur Befestigung der Motorabdeckung 102 aufweisen, welche entsprechende Löcher 140 zum Durchführen der Schrauben hat. Gleichzeitig dient die tubusförmige Fortsetzung des Spalttopfes mit nach oben scheibenförmiger Ausprägung auch zur Zentrierung des Statorrückschlussringes, d.h. der Statorzahnaufnahme 112

Die Nassläuferpumpe hat eine erste Gehäusehälfte 142 und eine zweite Gehäusehälfte 144, durch welche das Gehäuse der Nassläuferpumpe 100 gebildet wird. Die Gehäusehälfte 142 hat in ihrem Zentrum eine Öffnung 146, welche an das luftspaltseitige Ende des Einlassstutzens 134 anschließt, sodass das Fluid 108 von dem Einlassstutzen 134 durch die Öffnung 146 fließt. Die Scheibe 130 ist an der Außenseite der Gehäusehälfte 142 befestigt, wie zum Beispiel durch Schraubverbindungen an einem ringförmigen Befestigungsbereich 148 der Gehäusehälfte 142. Die Einlassleitung wird bei der hier betrachteten Ausführungsform also durch den Einlassstutzen 134 mit der an seinem luftspaltseitigen Ende angeordneten Lagerbuchse 156 gebildet.

Der Impeller 128 befindet sich zwischen diesen Gehäusehälften 142 und 144. An dem Impeller 128 ist der Rotor dadurch ausgebildet, dass der Ring 124 mit den Permanentmagneten 122 über eine Antriebscheibe 150 mit dem Impeller 128, zum Beispiel durch Schrauben 153, verbunden ist. Nach einer alternativen Ausführungsform können die Permanentmagnete 122 auch unmittelbar an dem Impeller 128 angeordnet sein. Ferner können die Permanentmagnete 122 zwischen dem Ring 124 und der Antriebsscheibe 150 angeordnet sein.

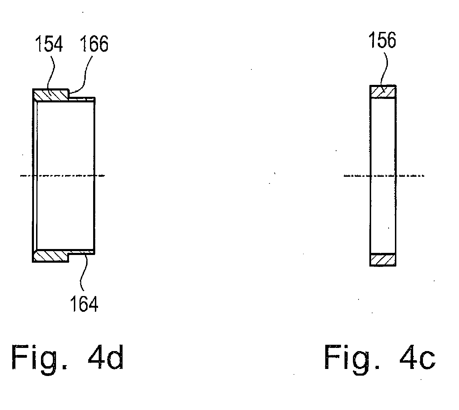

Der Impeller hat einen Fortsatz 152 zur Aufnahme eines Gleitlagerelements 154, welches zusammen mit einer Lagerbuchse 156 ein Gleitlager zur Radiallagerung des Impellers 128 bildet (vergleiche Figuren 4c und 4d). Das Lager lagert den Impeller 128 mit einem axialen Freiheitsgrad, da auf den Impeller 128 über die Permanentmagnete 122 eine magnetische Anziehungskraft in axialer Richtung auf den Stator 110 hin ausgeübt wird, sodass die axiale Position des Impellers 128 ebenfalls bestimmt ist. Das durch das Gleitlagerelement 154 und die Lagerbuchse 156 gebildete Lager kann so ausgebildet sein, dass es einseitig in axialer Richtung als ein Widerlager zur Aufnahme der magnetischen Anziehungskraft ausgebildet ist (vergleiche hierzu Figuren 4c und 4d).

Diese magnetische Anziehungskraft des Stators 110 hat ferner - unter Rotation - einen selbstzentrierenden Effekt auf den Impeller 128, was die Beanspruchung des Gleitlagers reduziert.

Die beiden Gehäusehälften 142 und 144 werden durch Schrauben 158 oder Klebstoff miteinander verbunden.

Auf diese Art und Weise wird ein Auslass 160 für das Fluid 108 gebildet.

Ausführungsformen der Erfindung sind besonders vorteilhaft, da das Fluid 108 statorseitig einströmt, und zwar durch den Stator hindurch. Aufgrund des Axialflussmotors ist ferner nur eine einseitige Lagerung des Impellers ohne jegliche Rotorwelle] erforderlich, was insgesamt eine besonders kompakte Bauform mit hoher Leistungsdichte ermöglicht.

Die Figur 2a zeigt eine Frontansicht eines der Statorzähne 126 gemäß der Ausführungsform nach Figur 1. Der Aufnahmebereich 118 des Statorzahns 126 dient zur Aufnahme von mehreren Wicklungen einer Spule, die von der Leistungselektronik 120 der Platine 136 angesteuert wird.

Der Aufnahmebereich 118 des Statorzahns 114 wird luftspaltseitig durch das Ende 126 des Statorzahns 114 abgeschlossen, welches einen im Vergleich zu dem Aufnahmebereich 118 vergrößerten Querschnitt hat. Dieser vergrößerte Querschnitt hat den Vorteil, dass das Magnetfeld in dem Luftspalt entsprechend aufgeweitet wird und in einem größeren räumlichen Bereich näherungsweise homogen ist. Hierdurch wird die Selbstzentrierung des Impellers 128 (vergleiche Figur 1) unterstützt, da die Permanentmagnete 122 des Rotors eine in radialer Richtung geringere Breite aufweisen als die Statorflussbreite.

Die Fig. 2a zeigt exemplarisch einen der Permanentmagnete 122, so wie er auf dem Impeller relativ zu dem Statorzahn 114 angeordent ist. In radialer Richtung ist der Permanentmagnet 122 kürzer als die Erstreckung des Endes 126 des Statorzahns 114 in radialer Richtung, so dass der Statorzahn über den Permanentmagnet 122 hinausragt. Beispielsweise ist der Permanentmagnet 122 mittig unter dem Aufnahmebereich 118 positioniert.

Der Statorzahn 114 hat in seinem oberen Bereich eine schlitzförmige Ausnehmung 162, die zur Befestigung des Statorzahns 114 an der Statorzahnaufnahme 112 dient (vergleiche Figur 3).

Die Figur 2b zeigt den Statorzahn 114 in einer Frontansicht und die Figur 2c in einer perspektivischen Ansicht.

Die Figur 3a zeigt eine Draufsicht des Stators 110 mit der ringförmigen Statorzahnaufnahme 112, die in ihrem Zentrum eine Öffnung hat, durch welche der Einlassstutzen 134 hindurch verläuft (vergleiche Figur 1). An der Peripherie der Statorzahnaufnahme 112 sind die Statorzähne 114 mit ihren Ausnehmungen 162 befestigt. Dies kann dadurch erfolgen, dass die Ausnehmung 162 und/oder die Statorzahnaufnahme 112 als Klebeflächen dienen, um den Statorzahn 114 mit seiner Ausnehmung 162 an den Rand der Statorzahnaufnahme 112 zu kleben. Die Figur 3b zeigt eine entsprechende Schnittansicht.

Die Figur 4a zeigt eine Draufsicht auf den Spalttopf 116, durch dessen Einlassstutzen 134 das Fluid einströmen kann. Wie aus der Fig. 4a ersichtlich verläuft die Einlassleitung durch die ringförmige Platine 136 hindurch.

Die Figur 4b zeigt eine Schnittansicht des Spalttopfs 116. Wie in der Figur 4b dargestellt, ist das luftspaltseitige Ende des Einlassstutzens 134 zur Aufnahme einer Lagerbuchse 156 ausgebildet, welche in der Figur 4c dargestellt ist. Hierzu ist an dem Endbereich des Einlassstutzens 134 ein Innenradius R ausgebildet, in welchen sich die Lagerbuchse 156 zum Beispiel mit Hilfe einer Presspassung einsetzen und fixieren lässt.

An dem Fortsatz 152 des Impellers 128 (vergleiche Figur 1) ist ein Gleitlagerelement 154 befestigt, welches das Gegenstück zu der Lagerbuchse 156 bildet. Das Gleitlagerelement 154 ist ringförmig ausgebildet und hat einen Endabschnitt 164, dessen Außendurchmesser reduziert ist, sodass hierdurch außen an dem Gleitlagerelement 154 eine umlaufende Kante 166 gebildet wird.

Die Lagerbuchse 156 nimmt also den Endabschnitt 164 des Gleitlagerelements 154 auf, wobei die Innenseite der Lagerbuchse 156 und die Außenseite des Endabschnitts 164 des Gleitlagerelements 154 die Gleitflächen des Gleitlagers bilden. Hierdurch wird der Impeller 128 radial gelagert. Der axiale Freiheitsgrad des Impellers 128 ist durch die umlaufende Kante 166 begrenzt.

Wird nämlich der Impeller 128 beim Betrieb des Axialmotors in Richtung auf den Stator 110 durch die auftretenden magnetischen Kräfte angezogen, so stößt die Kante 166 auf die Frontseite der Lagerbuchse 156, wodurch ein Widerlager zur Aufnahme dieser magnetischen Anziehungskraft gebildet wird. Obschon also der Impeller 128 mit einem axialen Freiheitsgrad, das heißt axialem Spiel, in dem Spalttopf 116 gelagert ist, ist dennoch aufgrund der magnetischen Anziehungskraft die axiale Position des Impellers 128 im Betrieb des Axialflussmotors definiert.

Vorzugsweise ist zumindest eine der Gleitflächen des Gleitlagers mit Diamond-Like-Carbon (DLC) und Siliziumcarbid (SiC) oder einer Kombination aus DLC und SiC beschichtet, um die Lebensdauer des Lagers zu vergrößern.

Besonders vorteilhaft ist nach Ausführungen der Erfindung, dass das Fluid 108 durch das Lager hindurch gesaugt wird, was wiederum zu der kompakten Bauform der Nassläuferpumpe beiträgt. Das Gleitlager kann einen sehr engen Spalt aufweisen, der zum Beispiel ca. 0,01 mm bis 0,03 mm beträgt und daher auch gleichzeitig sehr gut abdichtet.

Nach einer Ausführungsform der Erfindung kann das Gleitlagerelement 154 ein oder mehrere radiale Öffnungen haben, wie zum Beispiel ca. 1 mm große Schmierbohrungen. Durch diese Öffnungen wird ein sehr kleiner Teil des Volumenstroms des Fluids 118 zwischen den Gleitflächen des Lagers hindurch gelenkt, um dieses zusätzlich zu schmieren. Vorzugsweise ist diese zumindest eine Öffnung in dem Endabschnitt 164 des Gleitlagerelements 154 angeordnet und auf das Zentrum gerichtet.

Die Figur 5 zeigt eine Draufsicht auf den Rotor mit den Permanentmagneten 122, die auf dem Ring 124 angeordnet sind. Vorzugsweise bestehen die Permanentmagnete 122 aus Samarium-Cobalt, was verschiedene Vorteile hat:
- Samarium-Cobalt kann bei relativ hohen Temperaturen eingesetzt werden, ohne dass die Remanenz leidet; insbesondere kann das Fluid 108 eine Temperatur von bis zu 200°C haben.
- Aufgrund seiner exzellenten Korrosionseigenschaften kann Samarium-Cobalt ohne Beschichtung und ohne Kapselung dem Fluid 108 ausgesetzt werden.
- Da keine Kapselung der Permanentmagnete 122 erforderlich ist, können diese mit einem maximalen Abstand von der Rotationsachse positioniert werden, sodass sich ein maximales Drehmoment und eine maximale Motorleistung bei einer gegebenen Menge von magnetischem Werkstoff ergibt.

Alternativ können auch andere Werkstoffe für die Permanentmagnete 122 eingesetzt werden, wie zum Beispiel Neodym-Eisen-Bor.

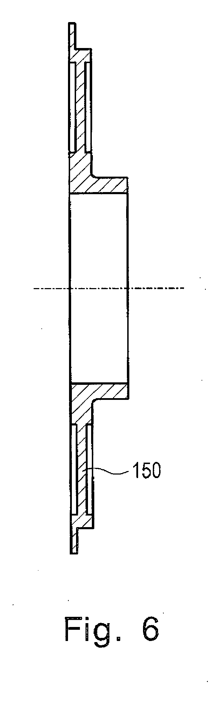

Die Figur 6 zeigt die Antriebsscheibe 150 im Querschnitt. Die Antriebsscheibe 150 dient dazu den Rotor, das heißt den Ring 124 mit den Permanentmagneten 122, mit dem Impeller 128 mechanisch zu verbinden, wobei der Fortsatz 152 des Impellers 128 durch die Antriebsscheibe 150 hindurchragt, wie in der Figur 1 gezeigt.

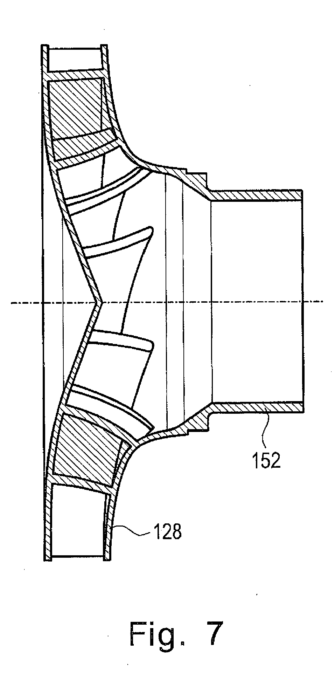

Die Figur 7 zeigt eine Schnittansicht des Impellers 128. Figur 8 zeigt eine Schnittansicht der Nassläuferpumpe 100 im montierten Zustand.

Zum Betrieb der Nassläuferpumpe 100 werden die Spulen der Statorzähne 114 von der Leistungselektronik angesteuert, sodass über den Rotor ein Drehmoment auf den Impeller 128 wirkt. Dieser saugt daraufhin das Fluid 108 durch den Einlassstutzen 134 und das Lager an, sodass das Fluid 108 durch die Nassläuferpumpe 100 hindurch gefördert wird und diese an dem Auslass 160 verlässt.

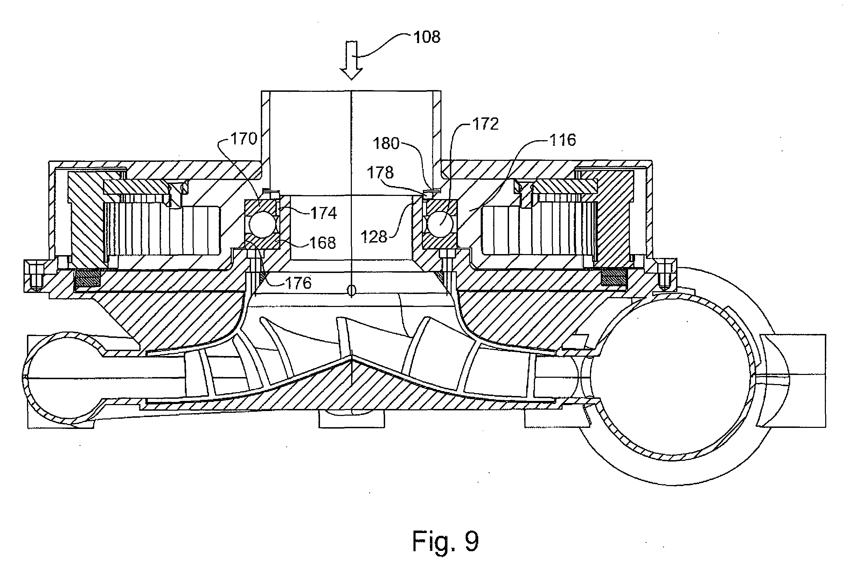

Die Figur 9 zeigt eine Schnittansicht einer erfindungsgemäßen Nassläuferpumpe, wobei der Impeller 128 durch eine Kombination aus Gleit- und Wälzlager gelagert ist. In der hier gezeigten Ausführungsform ist das Wälzlager als Kugellager ausgebildet. Es ist allerdings auch die Verwendung anderer Varianten von Wälzlagern, wie beispielsweise Rollenlager, Kegellager, Nadellager oder ähnlichem denkbar.

Das Wälzlager wird durch zwei Lagerschalen 170 und 168 gebildet, welche Laufflächen zur Aufnahme von Wälzkörpern 172 aufweisen. Hierbei ist die untere Lagerschale 168 am Impeller 128 befestigt, während die obere Lagerschale 170 am Spalttopf befestigt ist. Die Lagerschalen können hierbei auf die entsprechenden Bauteile beispielsweise aufgeklebt, aufgeschrumpft, aufgepresst, oder auch festgeschraubt sein. Die Wälzkörper befinden sich in dem Zwischenraum zwischen den Lagerschalen, welcher durch die Laufflächen der Lagerschalen umschrieben wird. Sind für den Betrieb der Pumpe hohe Drehzahlen des Impellers vorgesehen, können die Wälzkörper durch einen Käfig miteinander verbunden werden um die Stabilität des Lagers zu erhöhen.

Das Gleitlager wird durch eine obere Gleitlagerfläche 174 zwischen der oberen Lagerschale 170 und der Mantelfläche des Impellers 128, sowie durch eine untere Gleitlagerfläche 176 zwischen der unteren Lagerschale 168 und dem Spalttopf 116 gebildet. Insbesondere an der Lagerfläche 174 hat das Gleitlager ein geringes Lagerspiel, wodurch ein Teil des Fluids 108 in das Wälzlager eindringen kann. Durch ein Eindringen des geförderten Fluid in das Wälzlager kann das Wälzlager zusätzlich geschmiert werden.

Das Lagerspiel, welches als ringförmige Öffnung angesehen werden kann, wird bevorzugt durch einen Feindrahtfilter 178 geschützt, um Fremdkörper, welche im geförderten Fluid enthalten sein können, vom Lagerbereich fernzuhalten. Der Feindrahtfilter 178 wird durch einen Klemmring 180 arretiert.

Durch eine entsprechend genaue Fertigung kann das Lagerspiel an den Gleitlagerflächen sehr klein gehalten werden, vorzugsweise im Bereich unter 0,1mm. Hierdurch wird vermieden, dass grobe Partikel, welche im Fluid 108 enthalten sein können in das Wälzlager eindringen und die Laufflächen der Lagerschalen oder die Wälzkörper beschädigen. Zudem dient dieser enge hydrodynamische Spalt als Dichtfläche zwischen Sog- und Druckseite der Pumpe, wodurch Leckageeffekte, die üblicherweise auftreten, wenn der Impeller sich klassisch an einer Welle befestigt befindet und nicht über die Sogseite gelagert ist, vermieden werden können.

Um die Langlebigkeit des Lagers weiter zu erhöhen ist es möglich die Laufflächen der Lagerschalen 168 und 170 und/oder die Wälzkörper 172 und/oder die Gleitlagerflächen 174 und 176 mit SiC, DLC oder Silizium-dotierten DLC zu beschichten. Als Alternative sind auch Keramik- bzw. Kunststofflager denkbar, die in wässrigen Medien reibungsarm und ohne Korrosionsgefahr einsetzbar sind.

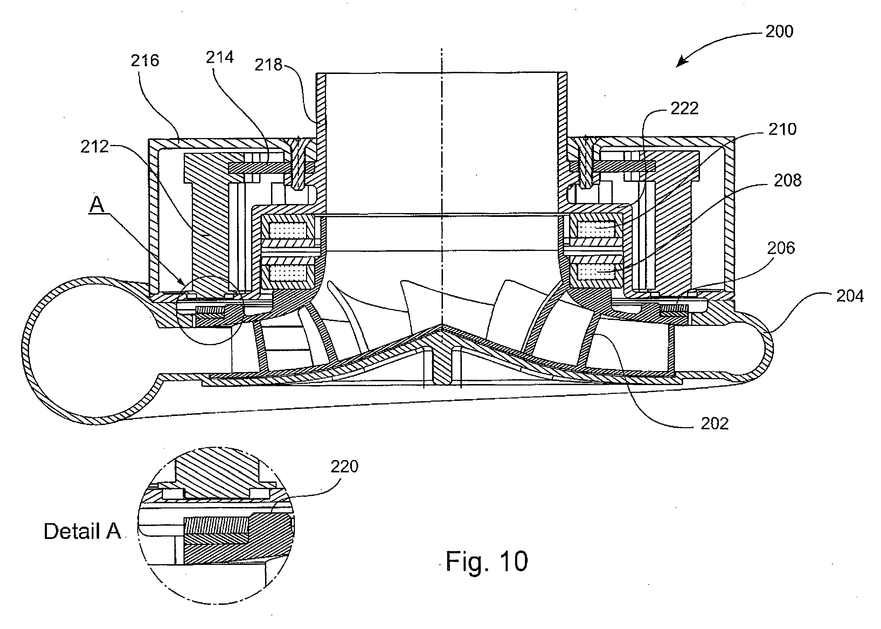

Die Figur 10 zeigt eine weitere Ausführungsform einer erfindungsgemäßen Nassläuferpumpe 200. Gegenüber der in Figur 9 dargestellten Nassläuferpumpe unterscheidet sie sich im Wesentlichen durch eine andere Geometrie und andere Abmessungen des Gehäuses 204, sowie der Motorabdeckung 216. Dies ist dadurch bedingt, dass die Rotormagnete 206 nun nicht mehr auf einer Antriebsscheibe, sondern direkt auf dem Impeller 202 befestigt sind. Damit der Abstand zwischen dem unteren Ende der Statorzähne 212 und den Rotormagneten weiterhin möglichst gering ist, sind die Statorzähne 212 in ihrer vertikalen Ausdehnung verlängert worden. Eine Folge hiervon ist, dass der Spalttopf 222 mit Ansaugstutzen 218 eine andere Form erhalten hat. Die Statorzahnaufnahme 214 hat sich gegenüber der Statorzahnaufnahme der in Figur 9 dargestellten Nassläuferpumpe nicht verändert.

Ein weiterer Unterschied der Nassläuferpumpe 200 gegenüber der in Figur 9 beschrieben Nassläuferpumpe besteht in der Lagerung des Impellers 202 in dem Spalttopf 222. Anstelle eines Wälzlagers, bestehend aus den Lagerschalen 168 und 170, sowie den Wälzkörpern 172, ist der Impeller 202 der Nassläuferpumpe 200 in axialer Richtung durch zwei magnetische Ringe gelagert, welche so magnetisiert sind, dass sie sich in montiertem Zustand in axialer Richtung abstoßen. Dabei ist ein unterer Magnetring 208 an dem Impeller 202 befestigt, während ein oberer Magnetring 210 an dem Spalttopf befestigt ist. Die Magnetringe können analog zu den Lagerschalen 168 und 170 der in Figur 9 dargestellten Nassläuferpumpe durch Aufkleben, Verschrauben, Aufschrumpfen, Festpressen oder andere Befestigungsverfahren befestigt werden.

Die magnetischen Ringe 208 und 210 bestehen aus Permanentmagneten, wie beispielsweise Neodym-Eisen-Bor (NdFeB) oder Samarium-Cobalt (SmCo) und sind metallisch vollstädig luft- und wasserdicht gekapselt. Die Kapselung kann hierbei beispielsweise durch Laser- oder Reibschweißen der Umkapselungsbestandteile erfolgen. Eine bevorzugte Ausführung der Umkapselungsbestandteile ist, dass die Umkapselung aller sich nicht zugewandten Seiten aus nicht-magnetischem Metall, wie beispielsweise Edelstahl besteht, während die aufgeschweißte Deckplatte, also die beiden sich zugewandten Seiten, aus weichmagnetischem Material besteht. Hierdurch wird der magnetische Fluss im Bereich der Deckplatten verstärkt.

Die Dicke der Kapselung kann beispielsweise zwischen 1 mm und 2mm betragen. Der impellerseitig aufgepresste magnetische Ring 208 ist analog zur unteren Lagerschale 168 der in der Figur 9 dargestellten Nassläuferpumpe so gefertigt, dass sich zwischen der äußeren Mantelfläche des magnetischen Rings 208 und der inneren Mantelfläche des Spalttopfs 222 ein hydrodynamischer Spalt ausbildet, der auch als Dichtspalt fungiert.

Die Magnetringe 208 und 210 sind bevorzugt so magnetisiert und ausgerichtet, dass die abstoßende Wirkung zwischen den Magnetringen näherungsweise proportional zum Quadrat des Abstands zwischen den Magnetringen ist. Dabei ist die Stärke der Magnetringe 208 und 210 bevorzugt so ausgelegt, dass sich im Ruhezustand der Nassläuferpumpe 200 ein Gleichgewicht zwischen der attraktiven Kraft zwischen Rotormagneten 206 und Statorzähnen 212 und der repulsiven Kraft zwischen den Magnetringen 208 und 210 einstellt. Hierdurch entsteht im Ruhezustand vorzugsweise ein Luftspalt zwischen dem unteren Ende der Statorzähne 212 und den Rotormagneten 206 von etwa 1 mm, während sich zwischen den Magnetringen 208 und 210 ein Luftspalt von 3mm Breite einstellt. Die magnetische Feldstärke, verursacht durch die Magnetringe 208 und 210 ist also stärker dimensioniert als die Feldstärke zwischen Rotormagneten 206 und Statorzähnen 212.

Bei zunehmender Drehzahl und damit steigender Leistung der Nassläuferpumpe 200 steigt der Differenzdruck zwischen der Sog- und Druckseite der Nassläuferpumpe 200 und damit die Anpresskraft des Impellers 202 nach oben, in Richtung auf den Ansaugstutzen 218 hin. Analog steigt auch die Anpresskraft auf die sich abstoßenden Magnetringe 208 und 210, sodass sich sowohl der Luftspalt zwischen den Magnetringen 208 und 210, als auch der Luftspalt zwischen den Rotormagneten 206 und den Statorzähnen 212 reduziert. Die Reduktion der Luftspalte setzt sich fort, bis ein neues Gleichgewicht zwischen Anpressdruck, attraktiver Kraft zwischen Rotormagneten 206 und Statorzähnen 212 und repulsiver Kraft zwischen den Magnetringen 208 und 210 eingestellt hat.

Um ein Aufsetzen des Rotors auf statische Komponenten der Nassläuferpumpe 200 zu vermeiden, kann die Leistungsgrenze der Nassläuferpumpe so bemessen werden, dass der Luftspalt zwischen den Rotormagneten 206 und den Statorzähnen 212 eine Breite von 0,2mm nicht unterschreitet. Zusätzlich können auf dem Rotor Sicherheitsgleitflächen 220 angebracht sein, die beispielsweise 0,2mm nach oben über die Rotormagnete 206 hinausragen. Diese können im Falle einer Überschreitung der zuvor genannten Leistungsgrenze den Rotor an dem Spalttopf 222 abstützen und eine Beschädigung des Impellers 202 oder der Rotormagnete 206 vermeiden.

Durch eine Reduktion des Luftspalts zwischen den Rotormagneten 206 und den Statorzähnen 212 bei zunehmender Druckleistung steigt die Kopplung zwischen Rotormagneten 206 und Statorzähnen 212 aufgrund der steigenden, magnetischen Flussdichte. Dies führt effektiv zu einer Leistungssteigerung und damit zu einem erhöhten Wirkungsgrad der Nassläuferpumpe 200.

### Bezugszeichenliste

- 100: Nassläuferpumpe
- 102: Motorabdeckung
- 104: Stirnseite
- 106: Öffnung
- 108: Fluid
- 110: Stator
- 112: Statorzahnaufnahme
- 114: Statorzahn
- 116: Spalttopf
- 118: Aufnahmebereich
- 120: Leistungselektronik
- 122: Permanentmagnet
- 124: Ring
- 126: Ende
- 128: Impeller
- 130: Scheibe
- 132: Ausnehmung
- 134: Einlassstutzen
- 136: Platine
- 138: Befestigungsbereich
- 140: Loch
- 142: Gehäusehälfte
- 144: Gehäusehälfte
- 146: Öffnung
- 148: Befestigungsbereich
- 150: Antriebsscheibe
- 152: Fortsatz
- 153: Schraube
- 154: Gleitlagerelement
- 156: Lagerbuchse
- 158: Schraube
- 160: Auslass
- 162: Ausnehmung
- 164: Endabschnitt
- 166: Kante
- 168: untere Lagerschale
- 170: obere Lagerschale
- 172: Wälzkörper
- 174: obere Gleitlagerfläche
- 176: untere Gleitlagerfläche
- 178: Feindrahtfilter
- 180: Klemmring
- 200: Nassläuferpumpe
- 202: Impeller
- 204: Pumpengehäuse
- 206: Rotormagnete
- 208: unterer Magnetring
- 210: oberer Magnetring
- 212: Statorzahn
- 214: Statorzahnaufnahme
- 216: Motorabdeckung
- 218: Ansaugstutzen
- 220: Sicherheitsgleitfläche
- 222: Spalttopf

## Patentansprüche

1. Nassläuferpumpe mit einem Axialflussmotor, der einen Stator (110, 112, 114), einen Spalttopf (116) und einen Rotor (122, 124) aufweist, wobei der Stator und der Spalttopf in einem Trockenbereich und der Rotor an einen Impeller (128) in einem Nassbereich angeordnet sind, mit einer Einlassleitung (134, 156) für ein durch den Impeller zu förderndes Fluid (108), **dadurch gekennzeichnet, dass** die Einlassleitung in axialer Richtung durch den Stator und den Spalttopf hindurch verläuft, und die Nassläuferpumpe eine Leistungselektronik (120; 136) zur Ansteuerung des Stators aufweist, wobei die Leistungselektronik im Inneren des zwischen dem Stator und dem Spalttopf umschriebenen Raums angeordnet ist.

2. Nassläuferpumpe nach Anspruch 1, wobei die Leistungselektronik auf einer ringförmigen Platine (136) angeordnet ist, und wobei die Einlassleitung in axialer Richtung durch die Platine hindurch verläuft.

3. Nassläuferpumpe nach Anspruch 1 oder 2, wobei der Spalttopf eine Scheibe (130) aufweist, wobei die Scheibe eine Zentralöffnung aufweist, auf der ein Einlassstutzen (134) zum Einlass des Fluids ausgebildet ist, wobei die Scheibe entlang ihres Umfangs Ausnehmungen (132) zur Aufnahme der luftspaltseitigen Enden der Statorzähne aufweist, wobei ein äußerer Radius der Platine durch die Ausnehmungen (132) und ein innerer Radius der Platine durch eine durch den Spalttopf gebildete in axialer Richtung verlaufende Wandung des Einlassstutzens (134) begrenzt ist.

4. Nassläuferpumpe nach Anspruch 1, 2 oder 3, mit einem Lager (154, 156) für den Impeller, wobei das Lager an einem Ende der Einlassleitung angeordnet ist, und das Lager den Impeller mit einem axialen Freiheitsgrad lagert, wobei die Einlassleitung in axialer Richtung durch das Lager hindurch verläuft, wobei die Einlassleitung vorzugsweise zumindest durch einen an dem Spalttopf ausgebildeten Einlassstutzen (134) und durch das Lager gebildet wird, wobei der Spalttopf vorzugsweise eine Scheibe (130) aufweist, die in den Luftspalt des Axialflussmotors ragt, und der Spalttopf einstückig ausgebildet ist, insbesondere als Formteil und/oder wobei der Stator torusförmig ausgebildet ist.

5. Nassläuferpumpe nach einem der vorhergehenden Ansprüche, wobei der Stator durch eine ringförmige Statorzahnaufnahme (112) gebildet wird, entlang deren Umfang Statorzähne (114) befestigt sind, wobei die Statorzahnaufnahme vorzugsweise mit den Statorzähnen beklebt ist, wobei vorzugsweise jeder der Statorzähne einen in axialer Richtung verlaufenden Aufnahmebereich für eine Spule aufweist, wobei der Aufnahmebereich durch ein luftspaltseitiges Ende (126) des betreffenden Statorzahns begrenzt ist, wobei das luftspaltseitige Ende des Statorzahns eine Stirnfläche aufweist, welche größer ist als der Querschnitt des Aufnahmebereichs, wobei der Spalttopf vorzugsweise eine Scheibe (130) aufweist, die in den Luftspalt hinreinragt, wobei die Scheibe eine Zentralöffnung aufweist, auf der ein Einlassstutzen (134) zum Einlass des Fluids ausgebildet ist, wobei ein Endbereich des Einlassstutzens das Lager aufnimmt.

6. Nassläufermotor nach einem der vorhergehenden Ansprüche, wobei es sich bei dem Lager um ein Gleitlager handelt, welches zur radialen Lagerung des Impellers ausgebildet ist sowie zur einseitigen axialen Lagerung des Impellers als Widerlager für die von dem Stator auf den Impeller ausgeübte magnetische Anziehungskraft.

7. Nassläuferpumpe nach Anspruch 5 oder 6, wobei das Lager spalttopfseitig durch eine in dem Endbereich des Einlassstutzens angeordnete Lagerbuchse (156) und impellerseitig durch ein Gleitlagerelement (154) gebildet wird, welches eine Gleitfläche (164) aufweist, welche in die Lagerbuchse eingreift.

8. Nassläuferpumpe nach Anspruch 7, wobei das Gleitlagerelement eine umlaufende Kante (166) aufweist, die so angeordnet ist, dass sie an der Lagerbuchse (156) einen Anschlag bildet, wenn eine magnetische Anziehungskraft von dem Stator auf den Rotor in axialer Richtung wirkt.

9. Nassläuferpumpe nach Anspruch 7 oder 8, wobei das Gleitlagerelement ein oder mehrere in radialer Richtung verlaufende Öffnungen aufweist, welche so ausgebildet sind, dass im Betrieb ein Teil des Fluidstroms zwischen der Gleitfläche des Gleitlagerelement und der Gleitfläche der Lagerbuchse hindurchgeleitet wird.

10. Nassläufermotor nach einem der vorhergehenden Ansprüche, wobei die Gleitfläche des Gleitlagerelements und/oder die Gleitfläche der Lagerbuchse mit einer Kombination aus Diamond-Like-Carbon (DLC) und Siliziumcarbid (SiC) beschichtet ist.

11. Nassläuferpumpe nach einem der vorhergehenden Ansprüche, wobei es sich bei dem Lager um eine Kombination aus Gleit- und Wälzlager handelt, welche zur radialen, sowie axialen Lagerung des Impellers ausgebildet sind, wobei das Wälzlager als Widerlager in axialer Richtung für die von dem Stator auf den Impeller ausgeübte magnetische Anziehungskraft dient und das Gleitlager den Rotor in radialer Richtung lagert, wobei das Wälzlager vorzugsweise durch Lagerschalen (168,170), welche eine Lauffläche zur Aufnahme von Wälzkörpern aufweisen, sowie Wälzkörpern (172) gebildet wird, wobei eine erste Lagerschale (168) an dem Impeller und eine zweite Lagerschale (170) an dem Spalttopf befestigt ist und die Wälzkörper sich in dem von den Laufflächen der beiden Lagerschalen umschriebenen Raum befindenund/oder wobei das Gleitlager impellerseitig (176) durch die äußere Mantelfläche der ersten Lagerschale, sowie die Mantelfläche des Spalttopfs und spalttopfseitig (174) durch die innere Mantelfläche der zweiten Lagerschale, sowie die Mantelfläche des Impellers gebildet wird und/oder wobei die Laufflächen und/oder die Mantelflächen der Lagerschalen und/oder die Wälzkörper mit Siliziumcarbid (SiC) und/oder Diamond-Like-Carbon (DLC) und/oder Silizium-dotierten DLC beschichtet sind.

12. Nassläuferpumpe nach Anspruch 11, wobei das Magnetlager durch Magnetringe (168,170) gebildet wird, wobei ein erster Magnetring an dem Impeller und ein zweiter Magnetring an dem Spalttopf befestigt ist und die Magnetisierung der magnetischen Ringe so gestaltet ist, dass sie sich im in der Nassläuferpumpe montierten Zustand in axialer Richtung abstoßen.

13. Nassläuferpumpe nach Anspruch 11 oder 12, wobei das Gleitlager impellerseitig (176) durch die äußere Mantelfläche des ersten Magnetrings, sowie die Mantelfläche des Spalttopfs und spalttopfseitig (174) durch die innere Mantelfläche des zweiten Magnetrings, sowie die Mantelfläche des Impellers gebildet wird, wobei die Mantelflächen der Magnetringe vorzugsweise mit Siliziumcarbid (SiC) und/oder Diamond-Like-Carbon (DLC) und/oder Silizium-dotierten DLC beschichtet sind.

14. Nassläuferpumpe nach einem der vorhergehenden Ansprüche, wobei das Lager durch einen Feindrahtfilter (178) vor dem Eindringen von Partikeln in das Lager geschützt ist.

15. Nassläuferpumpe nach einem der Ansprüche, wobei die Scheibe entlang ihres Umfangs Ausnehmungen (132) zur Aufnahme der luftspaltseitigen Enden der Statorzähne aufweist, und/oder wobei der Rotor Samarium-Cobalt (SmCo) beinhaltet und/oder wobei der Rotor durch mehrere an der Peripherie des Impellers angeordnete Permanentmagnete (122) oder durch einen magnetischen Ring mit multipolarer Magnetisierung gebildet wird und/oder wobei durch das Lager eine Dichtung gebildet wird und/oder wobei die Permanentmagnete (122) in radialer Richtung kürzer sind als die Enden (126) der Statorzähne (114).

## Claims

1. A wet rotor pump with an axial flow motor that has a stator (110, 112, 114), a rear casing (116), and a rotor (122, 124), the stator and the rear casing being arranged in a dry area and the rotor being arranged on an impeller (128) in a wet area, with an intake pipe (134, 156) for a fluid (108) to be conveyed by the impeller, **characterized in that** the intake pipe runs in the axial direction through the stator and the rear casing, and the wet rotor pump has power electronics (120; 136) to control the stator, the power electronics being arranged inside the space circumscribed between the stator and the rear casing.

2. The wet rotor pump according to claim 1, wherein the power electronics are arranged on an annular circuit board (136), and the intake pipe runs through the circuit board in the axial direction.

3. The wet rotor pump according to claim 1 or 2, wherein the rear casing has a disc (130) with a central opening that has an intake neck (134) on it to intake the fluid, the disc having, along its perimeter, recesses (132) to hold the air gap-side ends of the stator teeth, an outer radius of the circuit board being bordered by the recesses (132) and an inner radius of the circuit board being bordered by a wall of the intake neck (134), this wall being formed by the rear casing and running in the axial direction.

4. The wet rotor pump according to claim 1, 2, or 3, with a bearing (154, 156) for the impeller, the bearing being arranged on one end of the intake pipe, and the bearing supporting the impeller with an axial degree of freedom, the intake pipe running through the bearing in the axial direction, the intake pipe preferably being formed at least by an intake neck (134) on the rear casing and by the bearing, the rear casing preferably having a disc (130) that projects into the air gap of the axial flow motor, and the rear casing being made in a single piece, especially as a molded part, and/or the stator being torus-shaped.

5. The wet rotor pump according to one of the preceding claims, wherein the stator is formed by an annular stator tooth holder (112) that has stator teeth (114) fastened along its perimeter, the stator tooth holder preferably having the stator teeth cemented to it, each of which preferably has a holding area for a coil, this holding area running in the axial direction and being bordered by an air gap-side end (126) of the stator tooth in question, the air gap-side end of the stator tooth having an end face that is larger than the cross section of the holding area, the rear casing preferably having a disc (130) that projects into the air gap and that has a central opening with an intake neck (134) on it to intake the fluid, an end area of the intake neck holding the bearing.

6. The wet rotor motor according to one of the preceding claims, wherein the bearing is a plain bearing, which is made to support the impeller in the radial direction and to support it on one side in the axial direction against the magnetic attraction exerted by the stator on the impeller.

7. The wet rotor pump according to claim 5 or 6, wherein on the rear casing side the bearing is formed by a bearing bushing (156) arranged in the end area of the intake neck and on the impeller side it is formed by a plain bearing element (154), which has a sliding surface (164) that engages into the bearing bushing.

8. The wet rotor pump according to claim 7, wherein the plain bearing element has an edge (166) around it that is arranged in such a way that it forms a stop on the bearing bushing (156) if the stator exerts an axial magnetic attraction on the rotor.

9. The wet rotor pump according to claim 7 or 8, wherein the plain bearing element has one or more openings running in the radial direction that are made in such a way that in operation part of the fluid flow is passed between the sliding surface of the plain bearing element and the sliding surface of the bearing bushing.

10. The wet rotor motor according to one of the preceding claims, wherein the sliding surface of the plain bearing element and/or the sliding surface of the bearing bushing is coated with a combination of diamond-like carbon (DLC) and silicon carbide (SiC).

11. The wet rotor pump according to one of the preceding claims, wherein the bearing is a combination of plain bearings and rolling bearings, which are designed to support the impeller radially and axially, the rolling bearing supporting it in the axial direction against the magnetic attraction exerted by the stator on the impeller and the plain bearing supporting the rotor in the radial direction, the rolling bearing preferably being formed by bearing shells (168, 170) that have a running surface to hold rolling bodies, and rolling bodies (172), a first bearing shell (168) being fastened to the impeller and a second bearing shell (170) being fastened to the rear casing, and the rolling bodies being located in the space circumscribed by the running surfaces of the two bearing shells and/or the plain bearing being formed, on the impeller side (176), by the outer lateral surface of the first bearing shell and the lateral surface of the rear casing, and on the rear casing side (174) by the inner lateral surface of the second bearing shell and the lateral surface of the impeller, and/or the running surfaces and/or the lateral surfaces of the bearing shells and/or the rolling bodies being coated with silicon carbide (SiC) and/or diamond-like carbon (DLC) and/or silicon-containing DLC.

12. The wet rotor pump according to claim 11, wherein the magnetic bearing is formed by magnetic rings (168, 170), a first magnetic ring being fastened to the impeller and a second magnetic ring being fastened to the rear casing, and the magnetic rings being magnetized in such a way that they repel one another in the axial direction when mounted in the wet rotor pump.

13. The wet rotor pump according to claim 11 or 12, wherein the plain bearing is formed, on the impeller side (176), by the outer lateral surface of the first magnetic ring and the lateral surface of the rear casing, and, on the rear casing side (174), by the inner lateral surface of the second magnetic ring and the lateral surface of the impeller, the lateral surfaces of the magnetic rings preferably being coated with silicon carbide (SiC) and/or diamond-like carbon (DLC) and/or silicon-containing DLC.

14. The wet rotor pump according to one of the preceding claims, wherein the bearing is protected from the particles entering it by a fine wire filter (178).

15. The wet rotor pump according to one of the preceding claims, wherein the disc has, along its perimeter, recesses (132) to hold the air gap-side ends of the stator teeth, and/or wherein the rotor comprises samarium-cobalt (SmCo) and/or wherein the rotor is formed by multiple permanent magnets (122) arranged on the periphery of the impeller or by a magnetic ring with multipolar magnetization, and/or the bearing forming a seal and/or the permanent magnets (122) being shorter in the radial direction than in the ends (126) of the stator teeth (114).

## Revendications

1. Pompe à rotor noyé avec un moteur à flux axial, qui présente un stator (110, 112, 114), une chemise d'entrefer (116) et un rotor (122, 124), où le stator et la chemise d'entrefer sont disposés dans une zone sèche et le rotor est disposé sur une roue à aubes (128) dans une zone humide, avec une conduite d'alimentation (134, 156) pour un fluide (108) devant être transporté par la roue à aubes, **caractérisée en ce que** la conduite d'alimentation s'étend dans la direction axiale à travers le stator et la chemise d'entrefer ; et la pompe à rotor noyé présente une électronique de puissance (120 ; 136) pour le démarrage du stator ; où l'électronique de puissance est disposée à l'intérieur de l'espace décrit entre le stator et la chemise d'entrefer.

2. Pompe à rotor noyé selon la revendication 1, où l'électronique de puissance est disposée sur une platine (136) de forme annulaire, et où la conduite d'alimentation s'étend dans la direction axiale à travers la platine.

3. Pompe à rotor noyé selon la revendication 1, ou 2, où la chemise d'entrefer présente un disque (130), où le disque présente une ouverture centrale, sur laquelle sont formés des embouts d'accès (134) pour l'entrée du fluide, où le disque présente des évidements (132) le long de son périmètre pour l'admission des extrémités des dents de stator du côté des entrées d'air, où un rayon extérieur de la platine est délimité par les évidements (132) et un rayon intérieur de la platine est délimité par une paroi de l'embout d'accès (134) s'étendant en direction axiale formée par la chemise d'entrefer.

4. Pompe à rotor noyé selon les revendications 1, 2, ou 3, avec un palier (154, 156) pour la roue à aubes, où le palier est disposé à une extrémité de la conduite d'alimentation, et le palier abrite la roue à aubes avec un degré de liberté axial, où la conduite d'alimentation s'étend à travers le palier dans la direction axiale, où la conduite d'alimentation est formée de préférence au moins par un embout d'accès (134) formé sur la chemise d'entrefer et par le palier, où la chemise d'entrefer présente de préférence un disque (130), qui s'étend dans l'entrée d'air du moteur à flux axial, et la chemise d'entrefer est conçue d'un seul tenant, notamment sous la forme d'un moule et/ou où le stator est conçu sous forme d'un tore.

5. Pompe à rotor noyé selon l'une des revendications précédentes, où le stator est formé par un réceptacle de dent de stator (112) le long du périmètre duquel sont fixées des dents de stator (114), où le réceptacle des dents de stator est de préférence encollé avec les dents de stator, où de préférence, chacune des dents de stator présente une zone de réception pour une bobine s'étendant dans la direction axiale, où la zone de réception est délimitée par une extrémité du côté entrée d'air (126) de la dent de stator concernée, où l'extrémité du côté entrée d'air de la dent de stator présente une surface frontale, laquelle est plus grande que la section transversale de la zone de réception, où la chemise d'entrefer présente de préférence un disque (130), qui dépasse à l'intérieur dans l'entrée d'air, où le disque présente une ouverture centrale sur laquelle est formé un embout d'accès (134) pour l'entrée du fluide, où la partie d'extrémité de l'embout d'accès reçoit le palier.

6. Pompe à rotor noyé selon l'une des revendications précédentes, où, dans le cas du palier, il s'agit d'un palier lisse, lequel est conçu pour le logement radial de la roue à aubes ainsi que pour le logement axial unilatéral de la roue à aubes sous forme d'une butée pour la force d'attraction magnétique exercée sur la roue à aubes par le stator.

7. Pompe à rotor noyé selon la revendication 5, ou 6, où le palier est formé par un coussinet de palier (156) disposé dans la zone d'extrémité de l'embout d'accès du côté de la chemise d'entrefer, et du côté de la roue à aubes par un élément de palier lisse (154), lequel présente une surface de glissement (164), laquelle pénètre en prise dans le coussinet de palier.

8. Pompe à rotor noyé selon la revendication 7, où l'élément de palier lisse présente une arête (166) périphérique qui est disposée de telle manière qu'elle forme une butée sur le coussinet de palier (156) lorsqu'une force d'attraction magnétique agit du stator vers le rotor dans la direction axiale.

9. Pompe à rotor noyé selon la revendication 7, ou 8, où l'élément de palier lisse présente une ou plusieurs ouvertures s'étendant en direction radiale, lesquelles sont formées de telle manière que, pendant le fonctionnement, une partie du flux de fluide est emmenée entre la surface de glissement de l'élément de palier lisse et la surface de glissement du coussinet de palier.

10. Moteur à rotor noyé selon l'une des revendications précédentes, où la surface de glissement de l'élément de palier lisse et/ou la surface de glissement du coussinet de palier sont revêtues avec une combinaison constituée de carbone comme du diamant (DLC) et de carbure de silicium (SiC).

11. Pompe selon l'une des revendications précédentes, où dans le cas du palier, il s'agit d'une combinaison constituée d'un palier lisse et d'un roulement mécanique, lesquels sont conçus pour le guidage par un palier radial, ainsi qu'axial, où le roulement mécanique sert de palier de butée dans la direction axiale pour la force d'attraction magnétique exercée par le stator sur la roue à aubes et le palier lisse guide le rotor dans la direction radiale, où le roulement mécanique est de préférence formé par des coquilles de coussinets (168, 170), lesquelles présentent une surface de roulement pour la réception d'éléments de roulement (172), où une première coquille de coussinet (168) est fixée sur la roue à aubes et une deuxième coquille de coussinet (170) est fixée sur la chemise d'entrefer et les éléments de roulement se trouvent dans l'espace décrit par les surfaces de roulement des deux coquilles de coussinet, et/ou où le palier lisse du côté de la roue à aubes (176) est formé par la surface d'enveloppe extérieure de la première coquille de coussinet, ainsi que la surface d'enveloppe de la chemise d'entrefer et du côté de la chemise d'entrefer (174), par la surface d'enveloppe intérieure de la deuxième coquille de coussinet, ainsi que la surface d'enveloppe de la roue à aubes, et/ou où les surfaces de roulement et/ou les surfaces d'enveloppe des coquilles de coussinet, et/ou les éléments de roulement sont revêtues avec du carbure de silicium (SiC), et/ou du carbone comme du diamant (DLC), et/ou du silicium dopé en DLC.

12. Pompe à rotor noyé selon la revendication 11, où le palier magnétique est formé par des anneaux magnétiques (168, 170), où un premier anneau magnétique est fixé sur la roue à aubes et un deuxième anneau magnétique est fixé sur la chemise d'entrefer et la magnétisation des anneaux magnétiques est conçue de telle manière qu'ils se repoussent en direction axiale à l'état monté dans la pompe à rotor noyé.

13. Pompe à rotor noyé selon la revendication 11, ou 12, où le palier lisse du côté de la roue à aubes (176) est formé par la surface d'enveloppe extérieure du premier anneau magnétique, ainsi que de la surface d'enveloppe de la chemise d'entrefer, et du côté de la chemise d'entrefer (174) par la surface d'enveloppe intérieure du deuxième anneau magnétique, ainsi que de la surface d'enveloppe de la roue à aubes, où les surfaces d'enveloppe des anneaux magnétiques sont de préférence revêtues avec du carbure de silicium (SiC), et/ou de carbone comme du diamant (DLC), et/ou de silicium dopé en DLC.

14. Pompe à rotor noyé selon l'une des revendications précédentes, où le palier est protégé contre l'intrusion de particules dans le palier par un filtre en fils fins (178).

15. Pompe selon l'une des revendications, où le disque présente des évidements (12) le long de son périmètre pour la réception des extrémités des dents de stator vers l'entrefer de chemise, et/ou où le rotor contient du samarium-cobalt (Sm-Co) et/ou où le rotor est formé par plusieurs aimants permanents (122) disposés sur la périphérie de la roue à aubes ou par un anneau magnétique avec une magnétisation multipolaire, et/ou où un joint est formé par le palier, et/ou où les aimants permanents (122) dans la direction axiale sont plus courts que les extrémités des dents de stator (114).
